# EUROPEAN PATENT APPLICATION

(11) **EP 3 872 234 A1**
(43) Date of publication of application: **01.09.2021**
(21) Application number: 20198733.6
(22) Date of filing: 28.09.2020
(51) Int. Cl.: C25B 1/04, C25B 1/46, C25B 11/052, C25B 11/061, C25B 11/089

(54) **HYDROGEN-GENERATING ELECTRODE RESPONSIVE TO LOAD FLUCTUATION AND METHOD OF MANUFACTURING THE SAME**

(30) Priority: 28.02.2020 KR 20200025171
(71) Applicant: Korea Institute of Energy Research, Daejeon 34129 (KR)
(72) Inventor: CHO, Hyun Seok, 34082 Daejeon (KR); KIM, Chang Hee, 35205 Daejeon (KR); KIM, Sang Kyung, 34097 Daejeon (KR); CHO, Won Chul, 34101 Daejeon (KR); KIM, Min Joong, 34082 Daejeon (KR)
(74) Representative: Prüfer & Partner mbB Patentanwälte · Rechtsanwälte

(57) **Abstract**

The present disclosure relates to an electrode (hydrogen-generating electrode) that generates hydrogen upon electrolysis of water or chlorine-alkali. According to the present disclosure, hydrogen generation efficiency comparable to that of a precious metal (or noble metal) may be secured using a transition metal and a non-precious metal.

## Description

### CROSS-REFERENCE TO RELATED APPLICATION

This application claims priority to Korean Patent Application No. 10-2020-0025171, filed on February 28, 2020 in the Korean Intellectual Property Office, the disclosure of which is incorporated herein by reference.

### BACKGROUND OF THE DISCLOSURE

### Field of the Disclosure

The present disclosure relates to an electrode (hydrogen evolution electrode) that generates hydrogen upon electrolysis of water or chlorine-alkali, and more particularly, to a hydrogen evolution electrode including a phosphide-based transition metal catalyst layer and a method of manufacturing the hydrogen evolution electrode.

### Description of the Related Art

Electrodes for electrolysis processes, particularly cathodes suitable for hydrogen generation in industrial electrolysis processes, are associated with hydrogen evolution reaction (HER) at a cathode in chlorine-alkali or water electrolysis. Typically, a cathode consists of a catalyst and a metal substrate coated with the catalyst. In this case, the metal substrate is formed of, for example, nickel (Ni), copper (Cu), or steel, and the surface of the metal substrate is coated with a catalyst containing ruthenium (Ru), platinum (Pt), or other precious metals as a basic component. In US Patents No. 4,465,580 and No. 4,238,311, coating based on ruthenium oxide mixed with nickel oxide, catalyst coating based on any platinum-nickel alloy and rhenium (Re) or molybdenum (Mo), catalyst coating based on molybdenum oxide, and other types of catalyst coating for application to a metal substrate suitable for promoting hydrogen generation are disclosed. However, most of these formulations show a rather short operating lifespan in typical industrial applications due to poor coating adhesion to metal substrates.

In recent years, a number of studies are underway to secure activity equivalent to a precious metal by performing electroless deposition of an alloy composed of a metal, such as nickel (Ni), cobalt (Co), and iron (Fe), and an element, such as phosphorus (P) and boron (B). However, durability against reverse current that may occur when stopping in an electrolytic cell has not yet been secured. Moreover, detachment of catalyst coating on a substrate causes significant decrease in electrolytic cell efficiency. As a representative conventional technique for improving durability associated with reverse current, there is a method of using a conductive substrate sequentially coated with a first intermediate protective layer, a catalyst layer, and a second external protective layer as a hydrogen-generating electrode. In this case, the protective layers are each formed of an alloy consisting of one or more metal selected from nickel (Ni), cobalt (Co), and chromium (Cr) and one or more nonmetals selected from phosphorus (P) and boron (B), and the catalyst layer contains the oxide of rhenium (Re) or molybdenum (Mo), which is a non-precious metal transition element, a platinum-group metal, an oxide (ruthenium dioxide, RuO₂), and the like. As other methods, there are a method of replacing an electrolyte in contact with an electrode with a liquid having very low electrical conductivity when stopped and a method of improving durability using an electrode including a ruthenium oxide layer or a nickel oxide layer that absorbs reverse current generated when an electrolysis device is stopped.

### [Related Art Documents]

### [Patent Documents]

Korean Patent Application Publication No. 10-207-0013409 (February 06, 2017)
Korean Patent No. 10-1614639 (April 15, 2016)
Japanese Patent Application Publication No. 2011-511158 (April 07, 2011)
Japanese Patent No. 5876811 (January 29, 2016)
Japanese Patent No. 6438741 (November 22, 2018)

### SUMMARY OF THE DISCLOSURE

Therefore, the present disclosure has been made in view of the above problems, and it is an object of the present disclosure to provide a hydrogen-generating electrode having high catalytic activity comparable to that of a precious metal and high durability during reverse current reaction.

In accordance with one aspect of the present disclosure, provided is a hydrogen-evolution electrode including a phosphide-based metal catalyst layer formed on a conductive base material, wherein the catalyst layer is formed of an amorphous alloy including a transition metal.

The catalyst layer may further include a sacrificial metal having lower standard reduction potential than that of the transition metal.

The conductive base material may be nickel (Ni), stainless steel 316L, or copper (Cu).

The transition metal may be cobalt (Co).

The sacrificial metal may be chromium (Cr) or manganese (Mn).

The catalyst layer may include 80 to 90 wt% of the transition metal, 5 to 10 wt% of the sacrificial metal, and 5 to 10 wt% of phosphorus (P).

In accordance with another aspect of the present disclosure, provided is a method of manufacturing a hydrogen-evolution electrode including preparing a catalyst solution including a transition metal solution and a phosphide solution; and forming a catalyst layer on a conductive base material using the catalyst solution.

The catalyst solution may further include a sacrificial metal solution having lower standard reduction potential than that of the transition metal.

The transition metal may be cobalt (Co).

The sacrificial metal may be chromium (Cr) or manganese (Mn).

The conductive base material may be nickel (Ni), stainless steel 316L, or copper (Cu).

The conductive base material may be stainless steel 316L, and nickel (Ni) strike plating may be performed on a surface of the stainless steel 316L.

### BRIEF DESCRIPTION OF THE DRAWINGS

The above and other objects, features and other advantages of the present disclosure will be more clearly understood from the following detailed description taken in conjunction with the accompanying drawings, in which:
FIGS. 1A and 1C are graphs showing the open circuit voltage (OCV) characteristics of a hydrogen evolution electrode at hold-off condition according to an embodiment of the present disclosure;
FIGS. 1B and 1D are graphs showing the XRD analysis results of a hydrogen-evolution electrode according to an embodiment of the present disclosure;
FIG. 2 is a graph showing the open circuit voltage (OCV) characteristics of a hydrogen evolution electrode at hold-off condition according to an embodiment of the present disclosure;
FIG. 3 includes scanning electron microscope (SEM) images and energy dispersive X-ray spectroscope (EDS) images for analyzing the composition of a hydrogen evolution electrode according to an embodiment of the present disclosure;
FIGS. 4A, 4B, and 4C are graphs showing the results of analyzing the performance of a hydrogen-evolution electrode according to an embodiment of the present disclosure;
FIGS. 5A and 5C include graphs showing the results of evaluating and analyzing the durability of a hydrogen-evolution electrode during repetitive on/off cycles according to a comparative example of the present disclosure;
FIGS. 5B and 5D include graphs showing the results of electrochemical impedance analysis for the durability of a hydrogen-evolution electrode before and after repetitive on/off cycles according to an embodiment of the present disclosure;
FIG. 6A is a graph showing the results of analyzing the performance of a hydrogen-evolution electrode according to an embodiment of the present disclosure; and
FIG. 6B is a graph showing the results of X-ray diffraction analysis for analyzing the performance of a hydrogen-evolution electrode according to an embodiment of the present disclosure.

### DETAILED DESCRIPTION OF THE DISCLOSURE

Hereinafter, the present disclosure will be described in detail. The terms used in the present specification are used to explain a specific exemplary embodiment and not to limit the present inventive concept. In the present specification, the expression of singularity includes the expression of plurality unless clearly specified otherwise in context.

A hydrogen-generating electrode according to one embodiment of the present disclosure includes a phosphide-based metal catalyst layer formed on a conductive base material. In this case, the catalyst layer includes a transition metal and phosphorus (P). The catalyst layer is formed of an amorphous alloy.

The catalyst layer may further include a sacrificial metal having lower standard reduction potential than that of the transition metal. More specifically, the catalyst layer may include a transition metal, phosphorus (P), and a sacrificial metal having lower standard reduction potential than that of the transition metal.

The phosphide-based metal may be an alloy composed of phosphorus (P) and a metal element.

The transition metal may be a metal (active metal species) that exhibits activity in hydrogen generation reaction.

Metals having lower standard reduction potential than that of the sacrificial metal may be used as the anode sacrificial material of a hydrogen-generating electrode catalyst, and the sacrificial metal may be a metal that does not have corrosion resistance against strong bases.

The conductive base material may be nickel (Ni), stainless steel 316L, or copper (Cu).

The transition metal may be cobalt (Co), iron (Fe), or nickel (Ni).

The sacrificial metal may be chromium (Cr) or manganese (Mn). The sacrificial metal represented by chromium (Cr) or manganese (Mn) has lower standard reduction potential than that of the transition metal including cobalt (Co), iron (Fe), or nickel (Ni), and does not have corrosion resistance against strong bases. Accordingly, an amorphous alloy composed of chromium (Cr) or manganese (Mn), the transition metal such as cobalt (Co), iron (Fe), or nickel (Ni), and phosphorus (P) may be used the sacrificial anode material of a hydrogen-generating electrode catalyst. In this case, the sacrificial metal functions as the sacrificial anode material, does not inhibit the activity of an active metal (transition metal) for hydrogen generation reaction, and is oxidized instead of the active metal when reverse current is generated, so that the activity of a cathode is maintained. Thus, even when the sacrificial anode material (sacrificial metal) is oxidized to be converted into a hydroxide when reverse current is generated, a metal (transition metal) having activity for hydrogen generation reaction is present. Accordingly, the hydrogen generation efficiency of the electrode may be maintained at a high level. This will be described in more detail as follows.

When reverse current is generated, when only an active metal (transition metal) (M = Co, Fe, or Ni) is present, as shown in Equation 1 below, the active metal may be oxidized to be converted into a hydroxide, thereby losing the activity of the transition metal for hydrogen generation reaction.

Equation 1. M + OH⁻ → M(OH)₂ + 2e⁻

On the contrary, when reverse current is generated, when both an active metal (transition metal) (M = Co, Fe or Ni) and a sacrificial anode material (sacrificial metal) (M_{A} = Cr or Mn) are present, as shown in Equation 2 below, the sacrificial metal having low standard reduction potential is oxidized to be converted into a hydroxide, thus maintaining the activity of the transition metal for hydrogen generation reaction.
Equation 2.

1) M_{A} + OH⁻ → M_{A}(OH)₂ + 2e⁻

2) M

The catalyst layer may include 80 to 90 wt% of the transition metal, 5 to 10 wt% of the sacrificial metal, and 5 to 10 wt% of the phosphorus (P).

In addition, a method of manufacturing a hydrogen-generating electrode according to one embodiment of the present disclosure includes a step of preparing a catalyst solution including a transition metal solution, a phosphide solution, and a sacrificial metal solution having lower standard reduction potential than that of the transition metal; and a step of forming a catalyst layer on a conductive base material using the catalyst solution.

The transition metal may be cobalt (Co), iron (Fe), or nickel (Ni).

The sacrificial metal may be chromium (Cr) or manganese (Mn).

The conductive base material may be nickel (Ni), stainless steel 316L, or copper (Cu).

The step of forming the catalyst layer may be performed through electroplating, electroless plating, hydrothermal synthesis, or chemical bath deposition.

The step of forming the catalyst layer may be performed through electroplating. When the step of forming the catalyst layer is performed through electroplating, the catalyst solution may be used as a plating solution, the ratio of the transition metal ion to phosphite in the catalyst solution may be 0.01 to 0.5, the applied current density may be 1 to 120 mA/cm², and electroplating may be performed at a temperature of 30 to 50 °C.

The conductive base material may be stainless steel 316L, and nickel (Ni) strike plating may be performed on the surface of the stainless steel 316L. By performing nickel strike plating, the bonding strength of the catalyst layer formed on stainless steel 316L, which is the conductive base material, may be improved.

Hereinafter, the present disclosure will be described in more detail through examples. These examples are intended to describe the present disclosure more specifically, but the scope of the present disclosure is not limited by these examples.

### Example 1. Manufacture of CoP electrode

The surface of a nickel (Ni) base material was electroplated with CoP to manufacture a CoP electrode.

The Ni base material was sequentially pre-treated with 30 wt% of NaOH and 20 wt% of HCl before plating to remove impurities and oxide films present on the surface of the Ni base material.

A plating solution was prepared by adding 1.2 M sodium hypophosphite monohydrate (NaH₂PO₂·H₂O, Sigma-Aldrich) as a phosphorus (P) source and 0.6 M cobalt (II) chloride hexahydrate (CoCl₂·6H₂O, JUNSEI) as a cobalt (Co) source to distilled water (DI water).

Ni was used as a counter electrode, a plated surface area was 1.77 cm², and plating was performed at room temperature for 450 seconds. When plating, the ratio of [Co²⁺]/[H₂PO₂⁻] in the plating solution was 0.5, the applied current density was 120 mA/cm², and temperature was 30 °C.

After plating, the electrode was washed with distilled water, followed by drying for more than 1 hour under vacuum.

In this case, in a catalyst layer formed on the final electrode, the weight ratio of P was 4 wt% and the weight ratio of Co was 96 wt%. Accordingly, in the catalyst layer formed on the final electrode, the atomic ratio of P was 6 at% and the atomic ratio of Co was 94 at% (Co_{0.94}P_{0.6}).

### Example 2. Manufacture of CoP electrode

Nickel strike plating was performed on the surface of a stainless steel (SUS) 316L base material, and then electroplating was performed on nickel plated on the surface of the stainless steel 316L base material in the same manner as in Example 1 to manufacture a CoP electrode. In this case, before plating, the stainless steel 316L base material was sequentially pre-treated with 30 wt% of NaOH and 20 wt% of HCl to remove impurities and oxide films present on the surface of the stainless steel 316L base material.

In this case, in a catalyst layer formed on the final electrode, the weight ratio of P was 4 wt% and the weight ratio of Co was 96 wt%. Accordingly, in the catalyst layer formed on the final electrode, the atomic ratio of P was 6 at% and the atomic ratio of Co was 94 at% (Co_{0.94}P_{0.6}).

### Example 3. Manufacture of CoMnP electrode

The surface of a nickel (Ni) base material was electroplated with CoMnP to manufacture a CoMnP electrode.

Before plating, the Ni base material was sequentially pre-treated with 30 wt% of NaOH and 20 wt% of HCl to remove impurities and oxide films present on the surface of the Ni base material.

A plating solution was prepared by adding, based on 1 L of the plating solution, 1.2 mol (1.2 M) sodium hypophosphite monohydrate (NaH₂PO₂·H₂O, Sigma-Aldrich) as a phosphorus (P) source, 0.6 mol (0.6 M) cobalt (II) chloride hexahydrate (CoCl₂·6H₂O, JUNSEI) as a cobalt (Co) source, and 0.06 mol (0.06 M) manganese chloride tetrahydrate (MnCl₂·4H₂O, JUNSEI) to distilled water (DI water) as a solvent.

Ni was used as a counter electrode, a plated surface area was 1.77 cm², and plating was performed at room temperature for 450 seconds. When plating, the ratio of [Co²⁺]/[H₂PO₂⁻] in the plating solution was 0.5, the applied current density was 120 mA/cm², and temperature was 30 °C.

After plating, the electrode was washed with distilled water, followed by drying for more than 1 hour under vacuum.

In this case, in a catalyst layer formed on the final electrode, the weight ratio of Mn was 5 wt%, the weight ratio of P was 5 wt%, and the weight ratio of Co was 90 wt%. Accordingly, in the catalyst layer formed on the final electrode, the atomic ratio of Mn was 5 at%, the atomic ratio of P was 9 at%, and the atomic ratio of Co was 86 at% (Co_{0.86}Mn_{0.05}P_{0.09}).

### Example 4. Manufacture of CoMnP electrode

Nickel strike plating was performed on the surface of a stainless steel (SUS) 316L base material, and then electroplating was performed on nickel plated on the stainless steel 316L base material in the same manner as in Example 3 to manufacture a CoMnP electrode. In this case, before plating, the stainless steel 316L base material was sequentially pre-treated with 30 wt% of NaOH and 20 wt% of HCl to remove impurities and oxide films present on the surface of the stainless steel 316L base material.

In this case, in a catalyst layer formed on the final electrode, the weight ratio of Mn was 5 wt%, the weight ratio of P was 5 wt%, and the weight ratio of Co was 90 wt%. Accordingly, in the catalyst layer formed on the final electrode, the atomic ratio of Mn was 5 at%, the atomic ratio of P was 9 at%, and the atomic ratio of Co was 86 at% (Co_{0.86}Mn_{0.05}P_{0.09}). Before plating, the stainless steel 316L base material was sequentially pre-treated with 30 wt% of NaOH and 20 wt% of HCl to remove impurities and oxide films present on the surface of the base material.

### Example 5. Manufacture of CoCrP electrode

Nickel strike plating was performed on the surface of a stainless steel (SUS) 316L base material, and then electroplating was performed on nickel plated on the stainless steel 316L base material as in the same manner as in in Example 3 to prepare a CoCrP electrode, except that CrCl₂ was used instead of MnCl₂. In this case, before plating, the stainless steel 316L base material was sequentially pre-treated with 30 wt% of NaOH and 20 wt% of HCl to remove impurities and oxide films present on the surface of the stainless steel 316L base material.

In this case, in a catalyst layer formed on the final electrode, the weight ratio of Mn was 5 wt%, the weight ratio of P was 5 wt%, and the weight ratio of Co was 90 wt%. Accordingly, in the catalyst layer formed on the final electrode, the atomic ratio of Mn was 5 at%, the atomic ratio of P was 9 at%, and the atomic ratio of Co was 86 at% (Co_{0.86}Mn_{0.05}P_{0.09}).

The manufacture conditions of Examples 1 to 5 and comparative examples are summarized in Table 1 below.

**[Table 1]**

| | Electrode base material | Plating composition | Plating solution |
|---|---|---|---|
| Example 1 | Ni | CoP | NaH₂PO₂·H₂O + CoCl₂·6H₂O |
| Example 2 | Stainless steel 316L + Ni strike plating | CoP | NaH₂PO₂·H₂O + CoCl₂·6H₂O |
| Example 3 | Ni | CoMnP | NaH₂PO₂·H₂O + CoCl₂·6H₂O + MnCl₂·4H₂O |
| Example 4 | Stainless steel 316L + Ni strike plating | CoMnP | NaH₂PO₂·H₂O + CoCl₂·6H₂O + MnCl₂·4H₂O |
| Example 5 | Stainless steel 316L + Ni strike plating | CoCrP | NaH₂PO₂·H₂O + CoCl₂·6H₂O + CrCl₂·4H₂O |

### Experimental Example 1. Voltage characteristics and structural analysis of amorphous CoP electrode

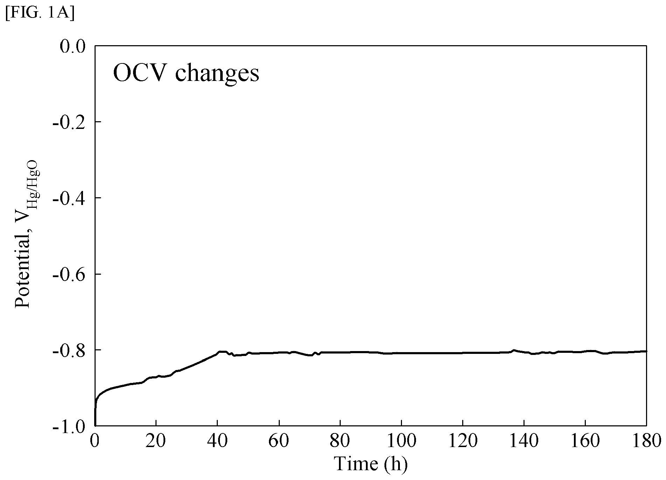

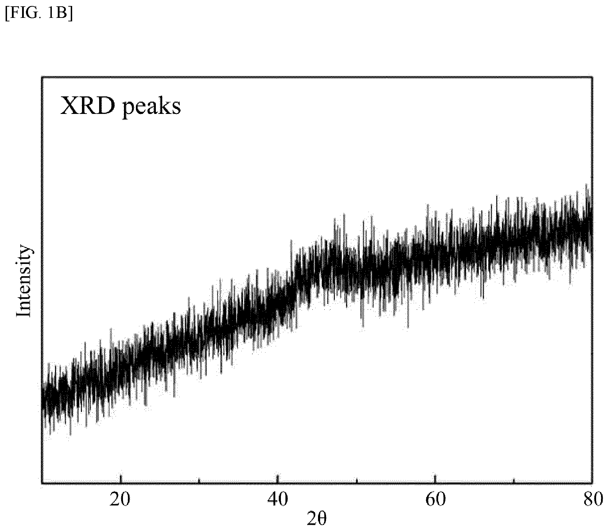

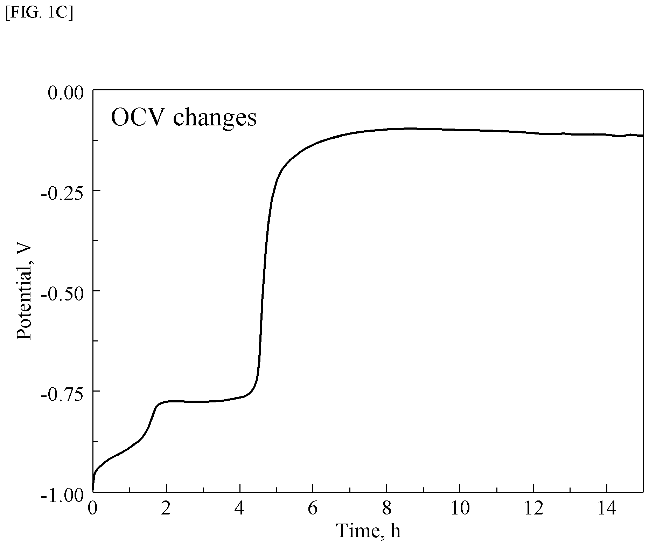

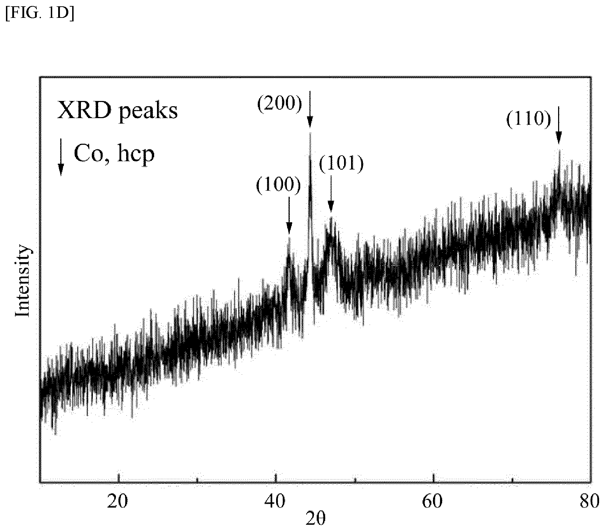

The hydrogen generation open circuit voltage (OCV) characteristics and the XRD analysis results of the CoP electrode manufactured in Example 1 are shown in FIGS. 1A and 1B, and the open circuit voltage (OCV) characteristics and the XRD analysis results of a CoP electrode having a crystal structure as a comparative example are shown in FIGS. 1C and 1D.

FIGS. 1A and 1C show open circuit voltage (OCV) characteristics, FIGS. 1B and 1D show XRD analysis results.

Referring to FIGS. 1A and 1B, in the case of the amorphous CoP electrode manufactured in Example 1, potential rise (oxidation reaction of Co catalyst) width over time is relatively small, and potential rise is slow (FIG. 1A). In addition, no crystalline peak is observed. Thus, it can be seen that the CoP electrode has an amorphous structure (FIG. 1B).

Referring to FIGS. 1C and 1D, in the case of the CoP electrode having a crystalline structure as a comparative example, potential change over time is significant, showing rapid potential rise for a short time (about 5 hours) (FIG. 1C), peaks are observed at (100), (101), (110), and (200), and the hexagonal close packed (HCP) crystal structure of Co is shown (FIG. 1D).

### Experimental Example 2. Analysis of voltage characteristics of CoMnP electrode and CoCrP electrode

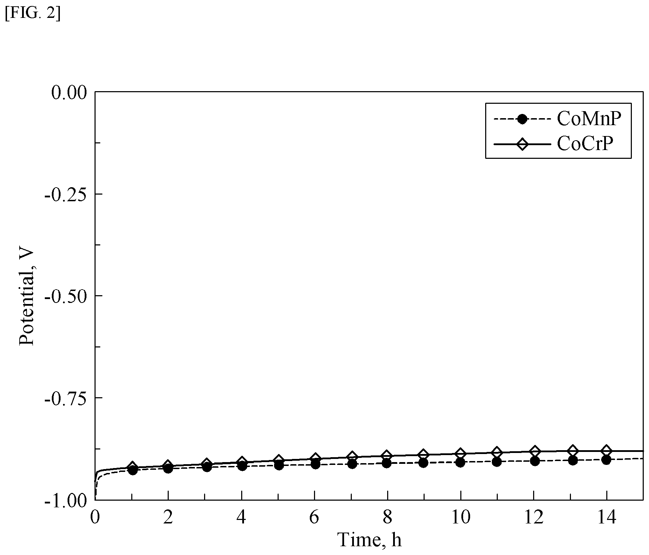

The hydrogen generation open circuit voltage (OCV) characteristics of the CoMnP electrode manufactured in Example 3 and the CoCrP electrode manufactured in Example 5 were analyzed, and the results are shown in FIG. 2.

Referring to FIG. 2, it can be confirmed that both the CoMnP electrode ('CoMnP') of Example 3 and the CoCrP electrode ('CoCrP') of Example 5 exhibit stable voltage characteristics.

### Experimental Example 3. Composition analysis of CoMnP electrode

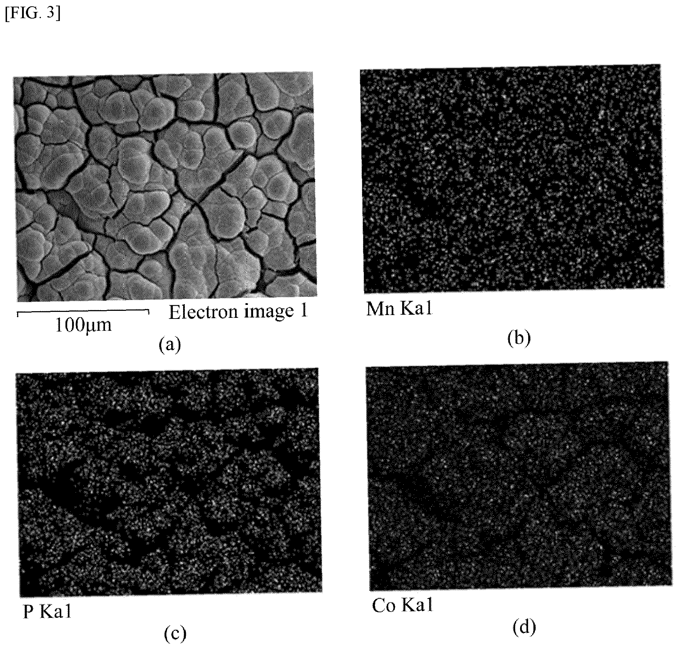

A scanning electron microscope image for analyzing the composition of a CoMnP catalyst in the CoMnP electrode manufactured in Example 3 and a scanning electron microscope (SEM)-energy dispersive X-ray spectroscope (EDS) image for Mn, P, and Co were obtained, and the obtained images are shown in FIG. 3 ((a): SEM image showing surface of CoMnP catalyst, (b): EDS image of Mn, (c): EDS image of P, and (d): EDS image of Co).

Referring to FIG. 3, it can be confirmed that Co, Mn, and P are evenly distributed on a surface.

### Experimental Example 4. Performance evaluation

Change in the performance (change in activity in hydrogen generation reaction (HER)) of the CoP electrode manufactured in Example 1 and the CoMnP electrode manufactured in Example 3 before and after stopping water electrolysis operation was analyzed using linear sweep voltammetry (LSV).

Performance change was measured using a three electrode system. In this case, the CoP electrode manufactured in Example 1 and the CoMnP electrode manufactured in Example 3 were used as working electrodes, Hg/HgO was used as a reference electrode, a platinum (Pt) mesh was used as a counter electrode, and performance change was measured at 25 °C in a 1M KOH electrolyte at a scan rate of 1 mV/s.

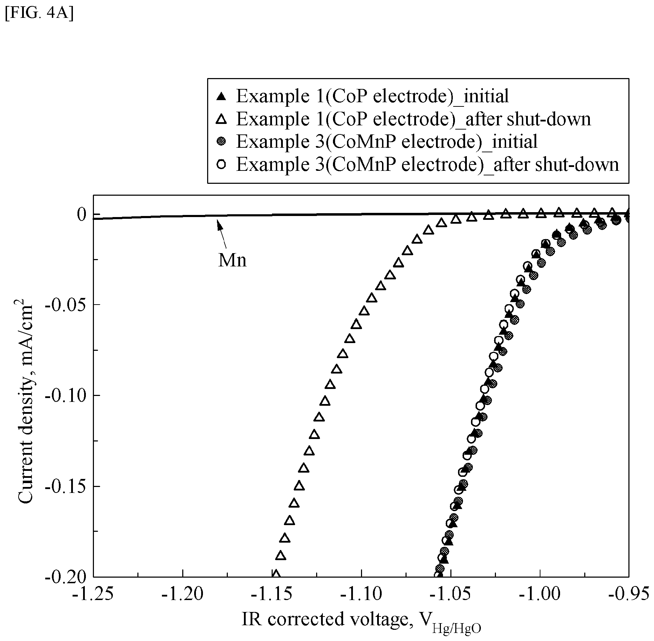

The measured results are shown in FIG. 4A. In FIG. 4A, performance change (blue line) for hydrogen generation reaction when the surface of a metal (nickel) base material is plated only with Mn is shown as an additional control group.

In measurement of performance change, for the CoP electrode (Example 1) and the CoMnP electrode (Example 3), during water electrolysis operation ('initial' in FIG. 4A) and 5 hours after operation is stopped (power off) ('after shut-down' in FIG. 4A), performance change is expressed as current density (A/cm²) according to IR corrected voltages.

Referring to FIG. 4A, when, compared to a theoretical voltage value (0.95 V (vs. Hg/HgO)) for hydrogen generation reaction, applied voltage (i.e., overvoltage) is small and a current value is large, this case exhibits good activity. Although activity for hydrogen generation reaction when a metal base material is plated only with Mn (light blue line) is small, during water electrolysis operation (initial), when the CoMnP electrode according to Example 3 is configured, there is no difference in activity (water electrolysis performance) compared to the CoP electrode (Example 1). In the case of the CoMnP electrode (Example 3), when measuring performance again after maintaining a condition of 5-hour operation stop (after shut-down), there is no activity change (performance deterioration) for hydrogen generation reaction. However, in the case of the CoP electrode (Example 1), when measuring performance again after maintaining a condition of 5-hour operation stop (after shut-down), overvoltage is observed, indicating deterioration in performance.

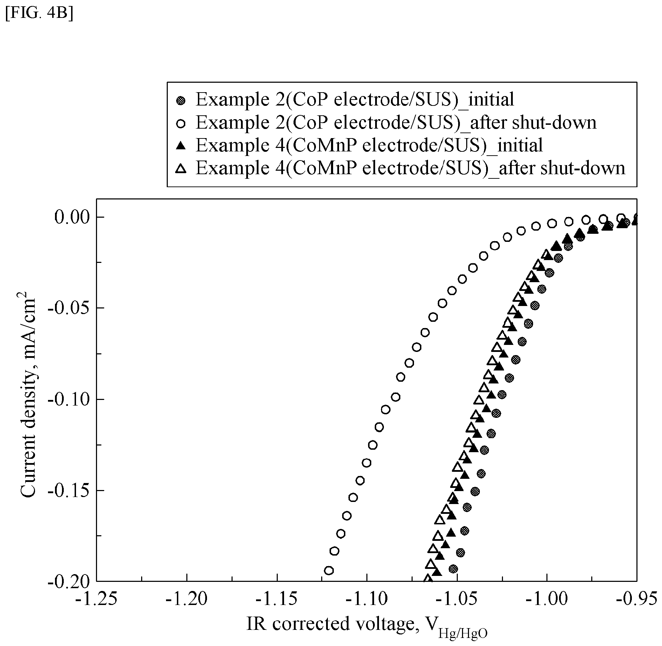

For the CoP electrode (CoP electrode/SUS) manufactured in Example 2 and the CoMnP electrode (CoMnP electrode/SUS) manufactured in Example 4, performance change was measured in the same manner as in the CoP electrode of Example 1 and the CoMnP electrode of Example 3, and the results are shown in FIG. 4B.

Referring to FIG. 4B, the results of FIG. 4B are similar to those shown in FIG. 4A. More specifically, during water electrolysis operation (initial), the CoMnP electrode/SUS according to Example 4 shows no difference in activity (water electrolysis performance) compared to the CoP electrode/SUS (Example 2). In the case of the CoMnP electrode/SUS (Example 4), when measuring performance again after maintaining a condition of 5-hour operation stop (after shut-down), there is no activity change (performance deterioration) for hydrogen generation reaction. However, in the case of the CoP electrode/SUS (Example 2), when measuring performance again after maintaining a condition of 5-hour operation stop (after shut-down), overvoltage is observed, indicating deterioration in performance.

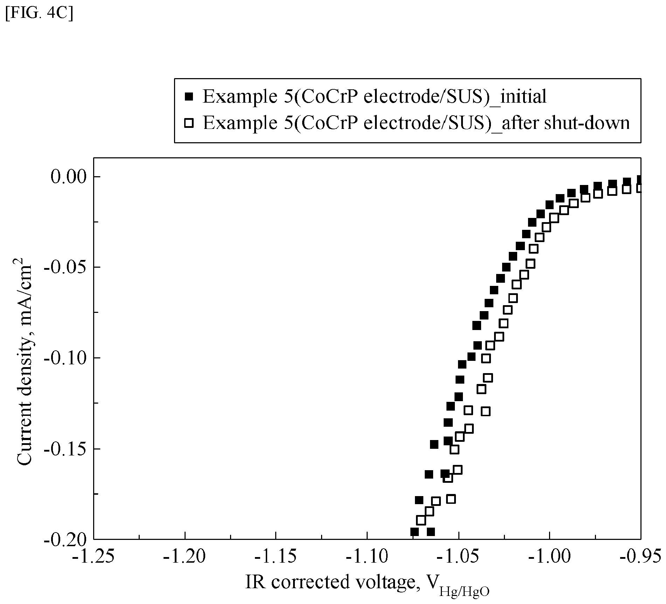

For the CoCrP electrode (CoCrP electrode/SUS) manufactured in Example 5, performance change was measured in the same manner as in the CoMnP electrode of Example 3, and the results are shown in FIG. 4C.

Referring to FIG. 4C, the results of FIG. 4C are similar to those shown in FIG. 4A. More specifically, during water electrolysis operation (initial), when measuring performance again after maintaining a condition of 5-hour operation stop (after shut-down), the CoCrP electrode (CoCrP electrode/SUS) according to Example 5 exhibits little change in activity (insignificant degradation in performance) for hydrogen generation reaction.

### Experimental Example 5. Durability evaluation

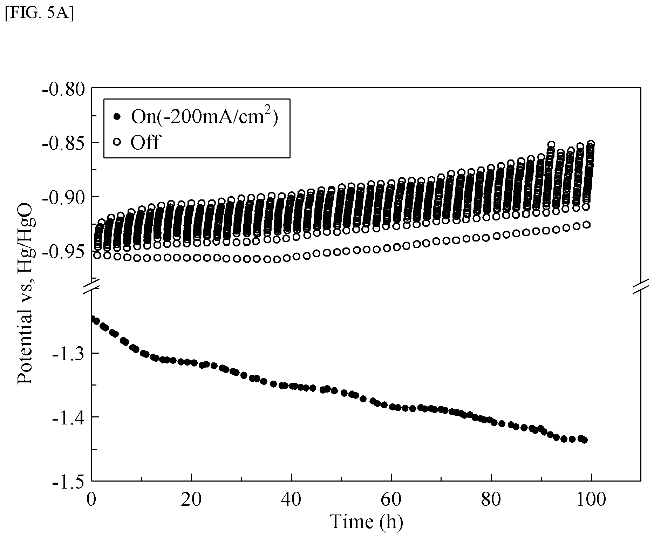

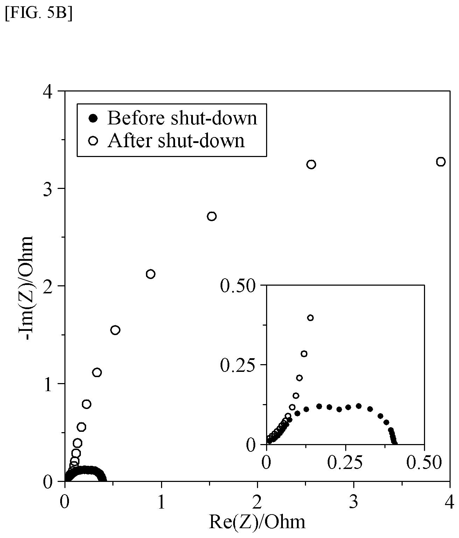

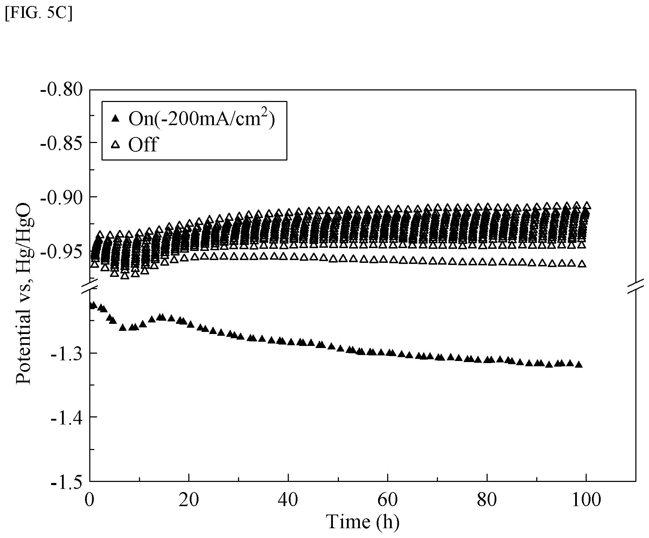

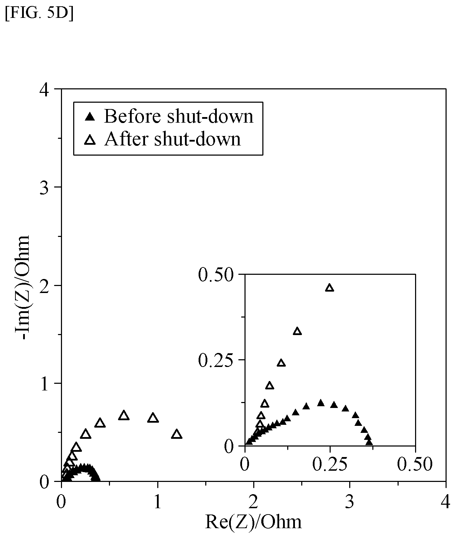

The CoP electrode manufactured in Example 1 and the CoMnP electrode manufactured in Example 3 were used as working electrodes, Hg/HgO was used as a reference electrode, a platinum (Pt) mesh was used as a counter electrode, and durability according to operation ('on' or 'Before shut-down')/stop ('off' or 'After shut-down') at 25 °C in a 1 M KOH electrolyte was evaluated. The obtained results are shown in FIG. 5A (Example 1), FIG. 5B (Example 1), FIG. 5C (Example 3) and FIG. 5D (Example 3).

In FIGS. 5A, 5B, 5C and 5D, when durability was evaluated, change in open circuit voltage (OCV) was measured while repeating a process of maintaining at a current density of -200 mA/cm² (on) for 1 hour and maintaining at 0 mA/cm² (off) for 1 hour.

Referring to FIG. 5A, in the case of Example 1 (CoP electrode), when maintaining at 200 mA/cm² ('on' in FIG. 5A) during operation, voltage continuously decreased from -1.05 V to -1.45 V (overvoltage rise = deterioration). When maintaining at 0 mA/cm² ('off' in FIG. 5A) corresponding to operation stop, voltage continuously increased from -0.95 V to -0.85 V (= deterioration). Referring to FIG. 5B, as a result of impedance analysis, in comparison with operation ('Before shut-down' in FIG. 5B) before durability evaluation, after operation is stopped after durability evaluation('After shut-down' in FIG. 5B), the size of the semicircle, which indicates deterioration in performance of the electrode, greatly increases.

However, referring to FIG. 5C, in the case of Example 3 (CoMnP electrode), when maintaining at 200 mA/cm² ('on' in FIG. 5C) during operation, voltage is -1.3 V. When maintaining at 0 mA/cm² ('off' in FIG. 5C) corresponding to operation stop, measured voltage is maintained at -0.90 V (performance maintenance). Referring to FIG. 5D, as a result of impedance analysis, in comparison with operation before durability evaluation ('Before shut-down' in FIG. 5D), after operation is stopped after durability evaluation ('After shut-down' in FIG. 5D), the size of the semicircle, which indicates deterioration in performance of the electrode, does not increase significantly.

### Experimental Example 6. Performance evaluation and X-ray diffraction analysis

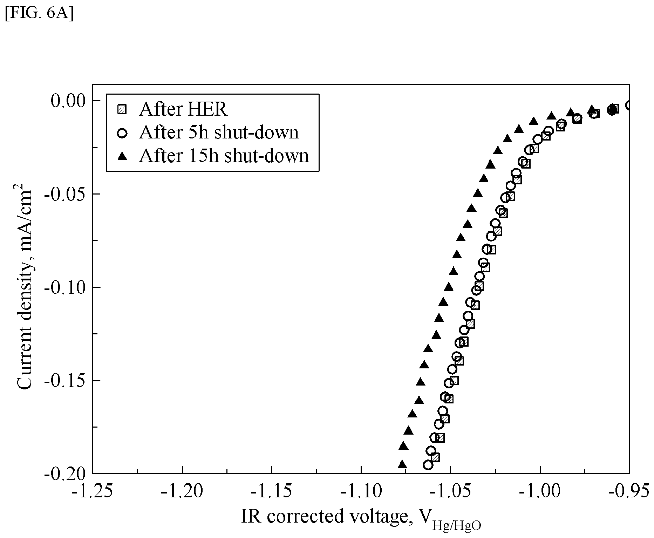

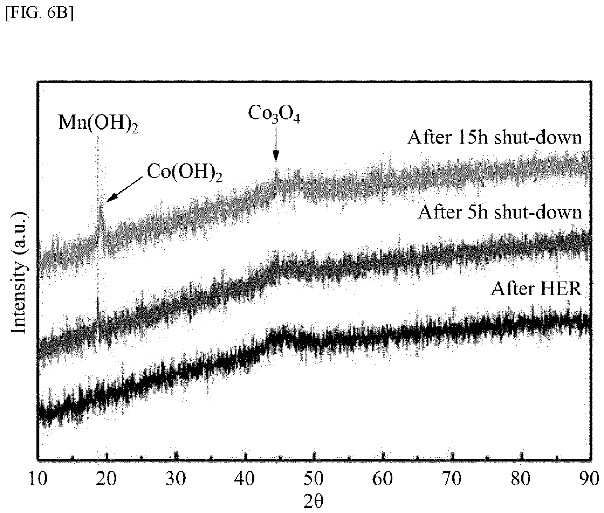

Experimental Example 6 was performed in the same manner as in Experimental Example 4. For the CoMnP electrode (Example 3), durability was evaluated using linear sweep voltammetry (LSV) immediately after hydrogen generation reaction (during operation) (After HER), 5 hours after stopping operation (After 5 h shut-down), and 15 hours after stopping operation (After 15 h shut-down). For each condition (immediately after hydrogen generation reaction (during operation) (After HER), 5 hours after stopping operation (After 5 h shut-down), and 15 hours after stopping operation (After 15 h shut-down)), X-ray diffraction (XRD) analysis results are shown in FIGS. 6A and 6B. As time maintained at 0 mA/cm² (stopping operation (shut-down)) increased, activity for hydrogen generation reaction decreased. 5 hours after stopping operation ('After 5 h shut-down' in FIG. 6A), no performance change was observed in the CoMnP electrode. 5 hours after stopping operation ('After 5 h shut-down' in FIG. 6B), the Mn(OH)₂ peak was observed at the surface of the CoMnP electrode. 15 hours after stopping operation ('After 15 h shut-down' in FIG. 6A), the performance of the CoMnP electrode deteriorated. As a result of XRD analysis ('After 15 h shut-down' in FIG. 6B), the Mn(OH)₂ peak and the Co(OH)₂ peak were observed at the surface of the CoMnP electrode. Based on these results, it was confirmed that the Co(OH)₂ peak was a major factor indicating performance degradation. In addition, it was confirmed that, by using Mn as a sacrificial anode material, before Co was oxidized, Mn was oxidized to be converted into Mn(OH)₂, thereby protecting Co, which was an active material (FIG. 6B).

In addition, referring to FIG. 6B, in the case of the CoMnP electrode (Example 3), during operation (After HER) after hydrogen generation reaction, 5 hours after stopping operation (After 5 h shut-down), and 15 hours after stopping operation (After 15 h shut-down), no clear peak is observed in X-ray diffraction analysis, indicating that the CoMnP electrode according to Example 3 has an amorphous phase.

### Experimental Example 7. Deactivation time

For the electrodes manufactured in Example 3 (CoMnP electrode), Example 4 (CoMnP electrode), and Example 5 (CoCrP electrode), five samples per each electrode were prepared, and an accelerated life test was performed at 80 °C in a 30 wt% KOH electrolyte in a repeated on/off cycle condition wherein operation was performed at a current density of 400 mA/cm² (on) for 1 hour and then operation was performed at 0 mA/cm² (off or shut-down) for 30 minutes.

In the accelerated life test, performance for hydrogen generation reaction was periodically evaluated using linear sweep voltammetry. Cathode potential was detected at 400 mA/cm² and defined as the number of cycles (average deactivation times) required for potential to increase by 100 mV. The number of cycles (average deactivation times) of the five samples of Example 3 (CoMnP electrode) was 1,112 times, the number of cycles (average deactivation times) of the five samples of Example 4 (CoMnP electrode) was 1,060 times, and the number of cycles (average deactivation times) of the five samples of Example 5 (CoCrP electrode) was 1,530 times.

According to the present disclosure, hydrogen generation efficiency comparable to that of a precious metal (or noble metal) can be secured using a transition metal and a non-precious metal.

In addition, by using a proper sacrificial metal as a sacrificial anode material, operation durability associated with operation (on)/stop (off) for hydrogen generation reaction of an active metal (transition metal) can be secured. Thereby, when a water electrolysis device is connected to regenerative power, stable operation of load fluctuation input can be secured.

Meanwhile, embodiments of the present disclosure disclosed in the present specification and drawings are only provided to aid in understanding of the present disclosure and the present disclosure is not limited to the embodiments. It will be apparent to those skilled in the art that various modifications can be made to the above-described exemplary embodiments of the present disclosure without departing from the spirit and scope of the invention.

Certain parts of the invention have been described in detail. Those skilled in the art will clearly understand that this specific description is only for preferred embodiments, and the scope of the present disclosure is not limited by these embodiments.

## Claims

1. A hydrogen-generating electrode, comprising:
a phosphide-based metal catalyst layer formed on a conductive base material,
wherein the catalyst layer is formed of an amorphous alloy comprising a transition metal and a sacrificial metal having lower standard reduction potential than that of the transition metal.

2. The hydrogen-generating electrode according to claim 1, wherein the conductive base material is nickel (Ni), stainless steel 316L, or copper (Cu).

3. The hydrogen-generating electrode according to claim 1 or 2, wherein the transition metal is cobalt (Co).

4. The hydrogen-generating electrode according to one of claims 1 to 3, wherein the sacrificial metal is chromium (Cr) or manganese (Mn).

5. The hydrogen-generating electrode according to one of claims 1 to 4, wherein the catalyst layer comprises 80 to 90 wt% of the transition metal, 5 to 10 wt% of the sacrificial metal, and 5 to 10 wt% of phosphorus (P).

6. A method of manufacturing a hydrogen-generating electrode, comprising:
preparing a catalyst solution comprising a transition metal solution and a sacrificial metal solution having lower standard reduction potential than that of the transition metal; and
forming a catalyst layer on a conductive base material using the catalyst solution.

7. The method according to claim 6, wherein the transition metal is cobalt (Co).

8. The method according to claim 6 or 7, wherein the sacrificial metal is chromium (Cr) or manganese (Mn).

9. The method according to one of claims 6 to 8, wherein the conductive base material is nickel (Ni), stainless steel 316L, or copper (Cu).

10. The method according to claim 9, wherein the conductive base material is stainless steel 316L, and nickel (Ni) strike plating is performed on a surface of the stainless steel 316L.
